Europäisches Patentamt

European Patent Office

Office européen des brevets

(11) Publication number: 0 123 390
A2

(12) **EUROPEAN PATENT APPLICATION**

(21) Application number: 84301400.2

(22) Date of filing: 02.03.84

(51) Int. Cl.³: B 01 D 3/30
C 02 F 1/04

(30) Priority: 22.03.83 GB 8308134

(43) Date of publication of application:
31.10.84 Bulletin 84/44

(84) Designated Contracting States:
AT BE CH DE FR GB IT LI NL SE

(71) Applicant: IMPERIAL CHEMICAL INDUSTRIES PLC
Imperial Chemical House Millbank
London SW1P 3JF(GB)

(72) Inventor: Cross, William Telford
Forest Ridge Norley Road
Cuddington Cheshire(GB)

(72) Inventor: Ramshaw, Colin
4 The Spinney
Norley Cheshire(GB)

(74) Representative: Thomas, Ieuan et al,
Imperial Chemical Industries PLC Legal Department:
Patents PO Box 6
Welwyn Garden City Herts, AL7 1HD(GB)

(54) Rotary evaporator.

(57) A process is described for separating a component of a solution or of a liquid mixture by evaporation which comprises feeding said solution or mixture to a heated rotating plate so as to convert a part of said solution or mixture to vapour form and condensing at least a part of said evolved vapour on an adjacent relatively cool rotating plate. Devices for use in the process are described. Weak aqueous caustic soda solutions may be concentrated and saline water may be purified by the process of the present invention.

Fig.1.

EP 0 123 390 A2

Croydon Printing Company Ltd.

QM 32646 EP
0123390

ROTARY EVAPORATOR

This invention relates to rotary evaporators and is in improved evaporator of rotary type.

The word "evaporator" is usually used to refer to stills in which a component of a solution or mixture is separated by conversion into vapour and thereafter either the residue is collected or the evolved vapour is condensed as the desired product. In some situations both the residue and the condensed vapour are regarded as products.

By way of example, a weak aqueous solution of caustic soda, for example that arising from a so-called membrane cell used in the production of chlorine, may be concentrated in an evaporator, the residual stronger solution being the desired product. By contrast, in a still designed for the purification of saline water, it is the evolved steam, after condensation, which is primarily the product sought.

It has been suggested, for example by K D C Hickman et al in "Advances in Chemistry Series" No.27, pages 128-46 (1960) that an evaporator for distillation of brackish or saline waters might take a rotary form, the feed water being evaporated from a rotating plate heated by steam. In our own attempts to develop a compact form of rotary evaporator we have been limited by the necessity of removing large volumes of evolved vapour from adjacent the axis of the rotor. Thus although we have found that the mass transfer rate of the evaporation step can be significantly enhanced by carrying out the evaporation on a fast-rotating plate or series of plates, the result of such enhancement has been to emphasis the problem of extracting the vapour.

We have now found that this problem can be solved by immediately condensing the evolved vapour upon an adjacent rotating plate and withdrawing the condensate as liquid from the outer edge of the plate.

Thus the present invention provides a process for separating a component of a solution or of a liquid mixture by evaporation which process comprises the steps of feeding said solution or mixture to a heated rotating plate so as to convert a part of said solution or mixture to vapour form and condensing at least a part of said evolved vapour on an adjacent relatively cool rotating plate.

The present invention further provides a rotary evaporator comprising at least one pair of plates, mounted for rotation about a common axis, means to feed a heating fluid to the outer face of the first plate, means to feed a coolant fluid to the outer face of the second plate, means to feed a solution or liquid mixture to the inner face of the first plate, means to withdraw a first liquid portion of said solution or mixture from said inner face of the first plate and means to withdraw a further liquid portion thereof from the inner face of the second plate. By "outer" we refer to the non-adjacent faces, and by "inner" to the adjacent faces, of the pair of plates.

In one particular embodiment of the present invention, the rotary evaporator comprises a series of at least two pairs of plates as aforesaid, all mounted about the same axis, adjacent pairs of plates being oppositely disposed with respect to the axis. That is the distribution of the four plates in two adjacent pairs may be cool plate, hot plate, hot plate, cool plate. Thus the channels defined by the plates may, in sequence in an axial direction, be

      (a) a channel forcoolant fluid;

      (b) a channel in which evaporation/condensation takes place;

      (c) a channel for heating fluid;

      (d) a channel in which evaporation/condensation takes place;

and so.

In an important further embodiment of the present invention the evaporator is a multiple-effect evaporator, in which vapour evolved in one stage (that is, between a first and second plate) is condensed by heat transfer to the feed material to a second stage (that is, between the second plate and a third plate), that feed material in turn being vapourised by the same heat transfer, the evolved vapour in turn being condensed at the third plate – and so on. It will be appreciated that the feed materials to adjacent stages may be the same or different. Where the said feed materials are the same or the said vapours are the same the pressure in those stages are arranged such that the desired vapourisation can occur.

Another important application of the present invention is described in the specification of a separate patent application of even date titled "Centrifugal Heat Pump". In that patent specification, we have disclosed a rotary heat pump of the absorption type, in which the evaporator and absorber may be combined in a single rotary unit; the vapour evolved at one rotary plate is absorbed into liquid flowing over a cooler surface of an immediately adjacent rotary plate.

The rate of mass transfer achieved in the process and apparatus according to the present invention may be enchanced by rotating the plates at such a rotary speed that any liquid thereon is subjected to an acceleration which is larger than, e.g. a multiple of, the acceleration due to gravity ('g'). Thus rotary speeds giving rise to accelerations of 5g to 1,000g, especially from 50g to 750g, more especially from 100g to 600g, are suitable.

The plates used in the rotary evaporator according to the present invention are typically in the form of discs or annuli.

The performance of the evaporator may alternatively or further be enhanced by arranging that a face of one or more of the plates upon which a condensible vapour condenses, for example that upon which the aforesaid evolved vapour condenses or that over which a condensible heating fluid flows, has a surface designed to discourage the formation of a continuous liquid film thereon. Preferably the face of the plates is treated such that (a) condensation of the condensible vapour thereon occurs in a dropwise fashion and (b) its wettability is reduced such that a formation of any continuous stable liquid film is discouraged. Such treatments include provision of a coating of inter alia a suitable silicone or polytetraluoroethylene on the surface.

The face of the plates over which the feed material, i.e. the liquid a portion of which is to be evaporated, flows, may advantageously be treated so as to assist the retention of a continuous liquid film thereon. Such treatment, which may be chemical, e.g. etching, or physical, e.g. sand-blasting, will in general be aimed at giving the surface an overall fine roughness.

The thickness of plates used in the rotary evaporator according to the present invention is generally between 0.1 mm and 5 mm, depending upon the material of construction, the specific evaporation to be carried out, and the form of surface features chosen. While the thickness of the plate may vary, and obviously will vary with some forms of surface features, in general when referring to plate thickness we refer to the plate thickness as it would be without those features. It will be sufficient to provide the necessary rigidity under operating conditions but thin enough to permit high thermal flux from one face to another. Typically the plate thickness is between 0.25 mm and 1.25 mm.

The outer diameter of the plates used in the rotary evaporator of the present invention is typically in the range 10 cm to 5 metres and is preferably between 50 cm and 100 cm and where the plates are in the form of annuli the inner diameter thereof is typically in the range 5 cm to 1 metre.

In the rotary evaporator according to the present invention, the distance between adjacent plates is preferably between 0.5 mm and 10 mm and more preferably is between 2 and 3 mm.

The plates are made of a suitable thermally conductive material which is able to withstand the environment to which it will be subjected during operation of the evaporator. As examples of suitable materials may be mentioned inter alia mild steel, stainless steel, copper and aluminium.

The heating fluid is preferably a condensible vapour which condenses to form a liquid on the outer face of a first plate in the rotary evaporator according to the present invention, and more preferably is steam.

The coolant fluid which flows over the outer face of a second plate in the rotary evaporator according to the present invention is preferably a liquid and conveniently is water.

Typically the drive means used in the evaporator according to the present invention is a belt driven by an electric motor. However, other drive means known in the rotary devices art, e.g. direct drive from an electric

0123390

motor, may be used.

In general, when a plate bearing liquid upon its surface is rotated, the centrifugal effect tends to move that liquid in a direction generally away from the axis of rotation. Thus the liquid to be evaporated in the rotary evaporator according to the present invention is conveniently fed to the plates at a point adjacent to their axis of rotation, for example to the centre of the plates when the latter are annular. Any liquid remaining unvaporised, i.e. the more concentrated solution than that fed to the evaporator, and any liquid formed by condensation of the vapour may separately be withdrawn from a point or points adjacent to the outer edge of the plates.

The invention will now be further described with reference to the accompanying drawings, in which

Figure 1. represents, in simplified sectional view, the manner of operation of the present invention, and

Figure 2 is a more detailed sectional view of a portion of the rotor of an evaporator according to the present invention.

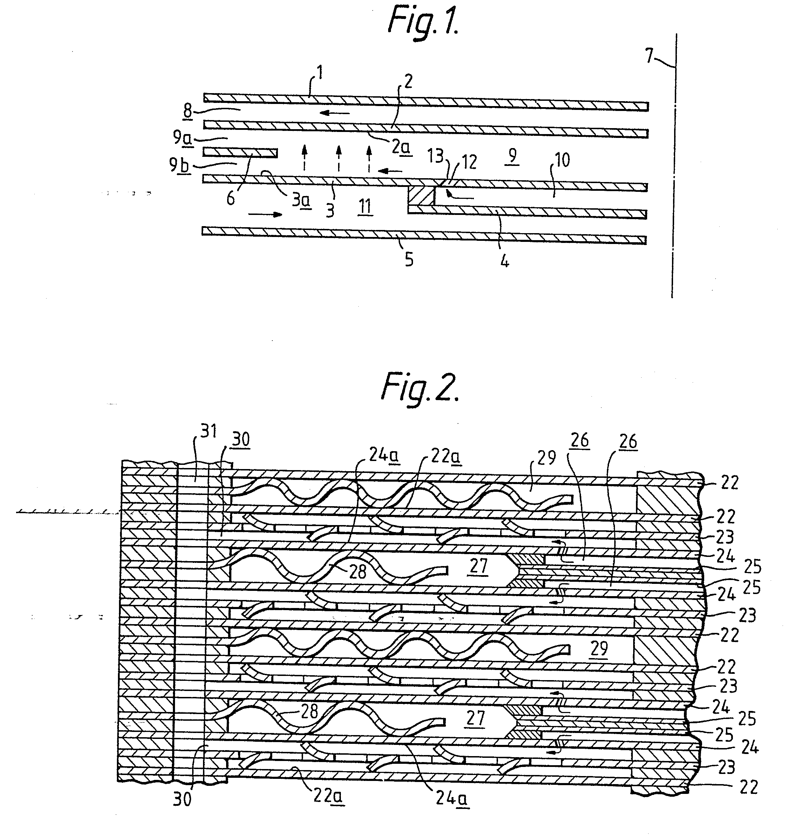

Referring firstly to Figure 1, five disc-shaped plates 1,2,3, 4, and 5 and an annular separator 6 are mounted, parallel to each other, for rotation together about an axis 7. The plates, taken in pairs, define parallel fluid passages 8, 9, 10 and 11. A coolant fluid, e.g. water, flows in passage 8 in a direction generally away from the axis of rotation. A heating medium, e.g. steam, is introduced near the circumference of the passage 11 and flows generally towards the axis.

The liquid to be evaporated, for example an aqueous solution of caustic soda which it is desired to evaporate, is introduced into the passage 10 near the axis and, by overflow through the aperture 12 and over the weir 13, forms a thin layer on the surface 3a of the plate 3. By heat exchange with the fluid in passage 11, via the thickness of the plate 3, the solution is caused to evolve vapour, which flows in the direction of the dotted arrows across the narrow width of the passage 9, condensing in turn on the surface 2a of plate 2 and being withdrawn as condensate at 9a. Meanwhile, concentrated solution is withdrawn at 9b.

Referring now to Figure 2, the rotor assembly of which only a part is shown is mounted to rotate about an axis at a short distance to the right of the figure, lying in the plane of the paper. The several parallel plates, which may each be formed as a pressing from a flat sheet, are numbered from 22 to 25, similar plates being similarly numbered.

In operation of the evaporator, the solution to be evaporated enters from the right of the figure via the channels 26 and flows, as indicated by the arrows, through apertures in the plates 24, to flow over the surfaces 24a and be partly evaporated by the heat transferred from heating fluid, e.g. steam, flowing radially inwardly in the adjacent channels 27. Separators 28 in the channels 27 and 29 and separators 23 in channels 32 give support to the structure overall and also improve the heat transfer. The separator plate 23 has closely space holes to allow passage of vapour and the edge of each hole nearest to the axis of the evaporator is provided with a lip, rather like a cheese grater, to hold the plates apart with a minimum contact area on the plates 22 and 24 in order to avoid undue transfer of heat between the plates 22 and 24 and under disturbance of the liquid films flowing on surfaces 22a and 24a. Separator plates 28 are provided with apertures (not shown) such that the passage of steam is not unduly hindered.

Vapour evolved at surfaces 24a traverses the space to adjacent plate surfaces 22a, where it is condensed by heat transfer to cooling fluid flowing in channels 29. The condensed liquid flows radially outwards over surfaces 22a and is discharged from the rotor through ports (not shown) adjacent the outer periphery of the plates 22. Meanwhile, concentrated solution remaining on the surfaces 24a after evolution of vapour is withdrawn from the rotor via apertures 30, 30 and via product channel 31.

CLAIMS

1. A process for separating a component of a solution or of a liquid mixture by evaporation which process comprises the steps of feeding said solution or mixture to a heated rotating plate so as to convert a part of said solution or mixture to vapour form and condensing at least a part of said evolved vapour on an adjacent relatively cool rotating plate.

2. A process as claimed in claim 1 wherein the plates are rotating at rotary speeds such that any liquid thereon is subjected to an acceleration of between 5 and 1000 times the acceleration due to gravity.

3. A rotary evaporator comprising at least one pair of plates, mounted for rotation about a common axis, means to feed a heating fluid to the outer face of the first plate, means to feed a coolant fluid to the outer face of the second plate, means to feed a solution or liquid mixture to the inner face of the first plate, means to withdraw a first liquid portion of said solution or mixture from said inner face of the first plate and means to withdraw a further liquid portion thereof from the innr face of the second plate.

4. A rotary evaporator as claimed in claim 3 comprising a series of at least two pairs of plates, all mounted about the same axis, adjacent pairs of plates being oppositely disposed with respect to the axis.

5. A rotary evaporator comprising at least three plates, mounted for rotation about a common axis, means to feed a heating fluid to the outer face of the first plate, means to feed a first solution or liquid mixture to the inner face of the first plate from where a first vapour is evolved which is condensed by heat transfer on the adjacent face of a second plate, means to feed a second solution or liquid mixture to the second face of the second plate from where a second vapour is evolved by the said heat transfer which is condensed by heat transfer on the adjacent face of a third plate.

6. A rotary evaporator as claimed in claim 3 or 5 wherein the distance between adjacent plates in between 0.5 and 10 mm.

0123390

1/1

*Fig.1.*

*Fig.2.*